Europäisches Patentamt

**European Patent Office**

Office européen des brevets

(11) Publication number: **0 098 096**
**A2**

# EUROPEAN PATENT APPLICATION

(21) Application number: **83303608.0**

(22) Date of filing: **22.06.83**

(51) Int. Cl.³: **F 02 B 17/00**
**F 01 L 1/12**

(30) Priority: **22.06.82 GB 8218049**

(43) Date of publication of application:
**11.01.84 Bulletin 84/2**

(84) Designated Contracting States:
**BE DE FR GB IT NL SE**

(71) Applicant: **White, Francis Wilfred**
**33 Rowley Road**
**Boston, Lincs., PE21 6JE(GB)**

(71) Applicant: **White, John David**
**'Syringa House' Wigtoft Road**
**Sutterton Boston, Lincs.(GB)**

(72) Inventor: **White, Francis Wilfred**
**33 Rowley Road**
**Boston, Lincs., PE21 6JE(GB)**

(72) Inventor: **White, John David**
**'Syringa House' Wigtoft Road**
**Sutterton Boston, Lincs.(GB)**

(74) Representative: **Valentine, Francis Anthony**
**Brinsley et al,**
**REDDIE & GROSE 16 Theobalds Road**
**London WC1X 8PL(GB)**

(54) **Stratified internal combustion engine.**

(57) An internal combustion engine having a plurality of cylinders, each provided with a normal inlet valve (4) and an exhaust valve is additionally provided with an auxiliary air admission system which includes an auxiliary inlet valve (5') for each cylinder, valve operating means (21,22,23,24) providing coordinated operation with the other valves of the cylinder, and a throttle valve (3'), interconnected with the carburettor throttle linkage. A further air inlet valve (1') located upstream of the air admission throttle valve (3') is spring biassed towards a closed position, against atmospheric pressure which tends to open the valve. The auxiliary air admission system provides stratification of the engine inlet mixture and permits operation with reduced fuel consumption and is particularly advantageous for use with an engine having the mixture inlet valve recessed into the cylinder head so as to provide an auxiliary combustion chamber (6').

FIG.1.

Croydon Printing Company Ltd.

STRATIFIED INTERNAL COMBUSTION ENGINE

This invention is directed to an internal combustion engine, and in particular to an engine incorporating an auxiliary air inlet system to the cylinders.

In the development of internal combustion engines, particularly of the spark ignition type, much work has been done on mixture control, including arrangements to provide a stratified charge, wherein the concentration of fuel within the cylinder combustion space is non-uniform so as to facilitate ignition, whilst enabling the engine to operate satisfactorily on reduced mixture strengths.

The present invention is directed to an internal combustion engine having at least one piston and associated cylinder; fuel admission means; an inlet valve, an exhaust valve and auxiliary air admission system including a first auxiliary air inlet valve; valve operating means for actuating the auxiliary valve in air admitting relation to the cylinder in predetermined relation with the exhaust valve, auxiliary valve, and auxiliary throttle valve control means for regulating the auxiliary throttle valve in relation to fuel admitted to the cylinder to provide controlled admission of auxilairy air to the engine in predetermined relation to the instantaneous operating mode of the engine.

In the preferred embodiment there is further provided a second auxiliary air inlet valve passage means connecting the second auxiliary valve in series flow relation with the first auxiliary air inlet valve on the upstream side thereof.

The second auxiliary air inlet valve includes valve control means resiliently biassing the second auxiliary air inlet valve towards a closed position.

The first auxiliary air inlet valve is located in a head portion of the engine, the "regular" inlet valve being located in a combustion chamber recessed in the head portion, having ignition means located adjacent thereto. The recess containing the inlet valve is of cylindrical section, having a somewhat enlarged top portion including a hemispherically shaped top. An inclined recess containing the inner end of the spark plug connects with the enlarged top portion of the combustor recess, such that the plug electrodes are normally located in substantial coincidence with the wall of the top chamber portion.

Certain embodiments are described by way of example with reference to the drawings, in which :-

Figure 1 shows a schematic sectional elevation view illustrative of condition on the induction stroke, at idle speed;

Figure 2 shows the end of the compression stroke at idle speed;

Figure 3 shows commencement of the power stroke at idle speed;

Figure 4 shows condition mid way through the exhaust stroke;

Figure 5 is a schematic plan view of a four cylinder engine incorporating the subject system;

Figure 6 is a schematic plan view of one cylinder showing the relative positions of the valves;

Figure 7 corresponds to Figure 1, with the engine at a high power setting, and

Figure 8 corresponds to Figure 1 with the engine operating in a deceleration mode.

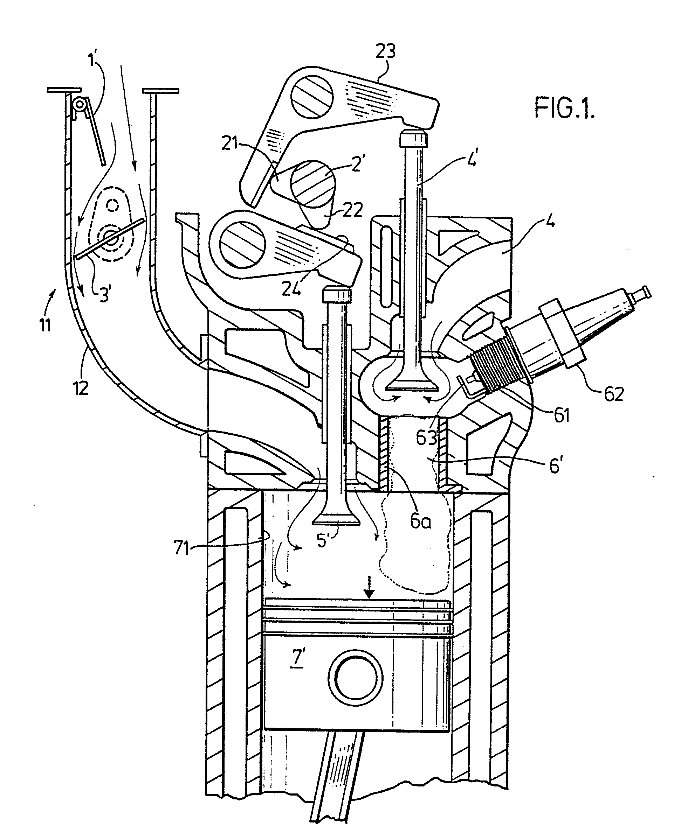

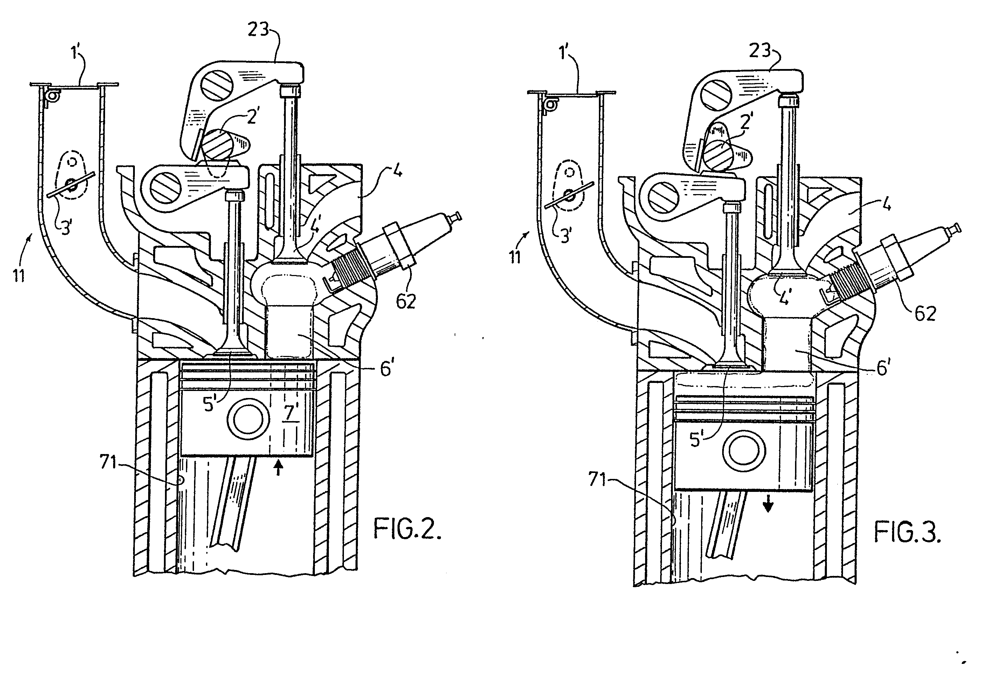

Referring to the drawings, wherein like numerals denote the same component in each of the figures; in Figures 1 and 2 the numeral 1' denotes a spring loaded choke valve, referred to also herein as the second auxiliary air inlet valve; numeral 2' denotes a camshaft connected respectively by way of the cam lobes 21,22 and rocker arms 23,24 with main inlet valve 4' and first auxiliary air inlet valve 5'.

A piston 7' illustrated as being of the standard flat topped type is located in a cylinder having a bore 71.

A cylindrical combustion chamber 6' located in the head cylinder is positioned off-centre from the bore 71 and piston 7'.

The chamber 6' has an enlarged, generally spherically shaped top portion, having an inclined bore 61 extending therefrom, wherein a spark plug 62 is threadedly inserted.

The electrodes 63 of spark plug 62 are normally positioned in substantial conicidence with the envelope of the spherical top portion of chamber 6' and positioned closely adjacent the head of inlet valve 4', whereby the incoming air/fuel mixture will swirl in scouring relation about the inner end of spark plug 62 and its electrodes 63.

The auxiliary air admission system 11 includes a manifold 12 having an auxiliary throttle valve 3', shown as a butterfly valve, connected by means (not shown) with the engine accelerator control system (also not shown) and also including adjustment means such as an adjustable set screw for regulating the respective settings of the auxiliary throttle valve 3' and the setting of the carburettor throttle valve by means of which the air/fuel mixture entering the inlet manifold 4 is effected.

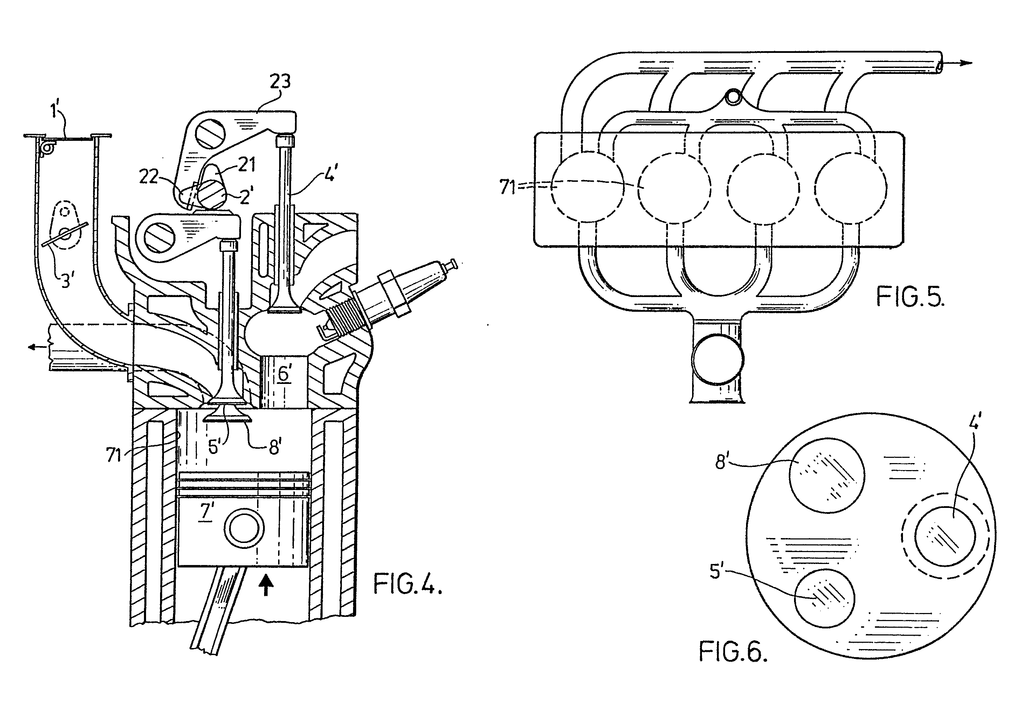

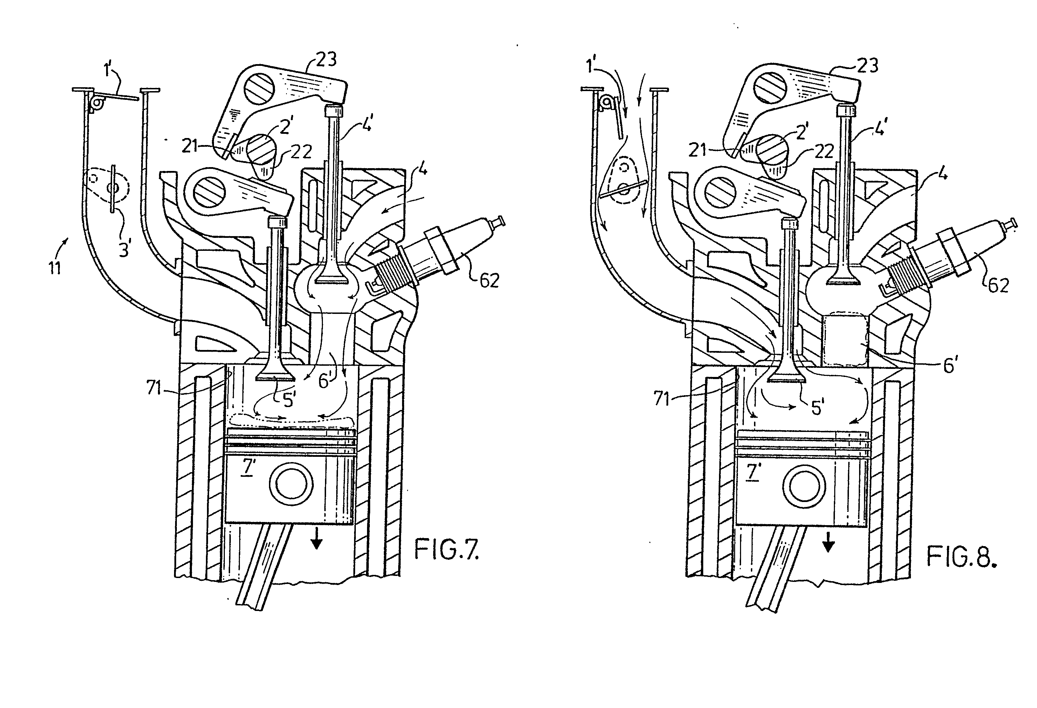

Figures 4 and 6 show the exhaust valve 8', while the first auxiliary air inlet valve 5' can be seen in all figures except Figure 5.

Turning to Figure 1, the piston 7' is shown travelling downwardly on the induction stroke of the 4-stroke cycle, the engine being in an idling condition, whereby the auxiliary throttle valve 3' is in the almost closed condition as that of the main carburettor throttle valve (not shown). Under the high vacuum conditions within cylinder 71, and with the auxiliary air inlet valve 5' fully open, the effects of atmospheric pressure hold the spring loaded choke valve 1' in an almost wide open condition.

The inlet valve 4' also being open, a air/fuel mixture from the carburettor enters and displaces downwardly into the main cylinder space the residual burnt gases from the preceding cycle of operation.

This causes the combustion chamber 6' to be filled with a somewhat rich air/fuel mixture, which is ideal for combustion purposes. Air entering past the air inlet valve 5' impinges on the top working face of the piston 7' and at least partially mixes with the residual burnt gases.

At the end of the induction stroke the combustible mixture is substantially contained in the chamber 6' having a mixture of air and exhaust gases in the cylinder proper. At the end of the induction stroke all valves 4', 5' and 8' close.

On the occurence of the compression stroke the piston 7' travels upwardly to the position shown in Figure 2, thereby compressing the gases. The mixture of fresh air and exhaust gases overlying the face of piston 7', in addition to being compressed also are displaced into the combustion chamber 6', serving thereby to compress the combustible air/fuel mixture therein. Owing to the relative proportions of the chamber 6' and the cylinder 71, there is little mixing of the fresh air and exhaust gases with the overlying air/fuel mixture, so that conditions for effective ignition are maintained.

Upon the occurrence of ignition the combustible mixture in the top spherical portion of the combustion chamber 6' ignites and expands into the main cylinder 71, there being a layer of mixed air and exhaust gases interposed between the piston 7' and the newly ignited charge, during the downward travel of piston 7' (Figure 3) in its working stroke.

On the return stroke of piston 7' (Figure 4) the exhaust valve 8' is open, whereby the residual gases in the main cylinder 71 are discharged to exhaust, a residue of newly burnt gases being left within the combustion chamber 6'.

Reversal of piston 7' in a downward direction (Figure 7) with closure of exhaust valve 8' and opening of main inlet valve $4^1$ and first auxiliary air valve $5^1$ recommences the cycle, with the induction stroke.

In the illustrated Figure 7 condition, being an acceleration condition wherein the accelerator pedal is more heavily depressed, the pressure condition within the cylinder 71 above piston $7^1$ are dictated primarily by the setting of the main throttle valve (not shown) of the carburettor, which is in a more fully open position, to admit a greater quantity of air/fuel mixture. The pressure drop across the main throttle valve being thereby reduced, the pressure within the cylinder 71 is closer to atmospheric. As a consequence, whilst the auxiliary throttle valve $3^1$ is open in substantial correspondence with the main throttle valve, the choke valve $1^1$ is very nearly closed, owing to the almost atmospheric pressure prevailing within the main cylinder 71. As a consequence, there is relatively little flow of auxiliary air into the cylinder 71.

Referring to Figure 8, with the engine operating in the deceleration mode the main throttle valve is fairly well closed, thereby increasing the vacuum in the cylinder with a consequent relatively large inflow of auxiliary air, holding the spring loaded choke valve in a well opened position. This tends to off set the usual rich mixture that otherwise is induced for orthodox engines.

In Figure 1 there is illustrated a liner 6a forming the lower wall portion of the combustion chamber $6^1$ As shown in Figure 1 the combustion chamber liner 6a is provided with a bottom flange or collar which abuts against

the top face of cylinder 71, to thereby retain the liner 6a in position.  The liner 6a is a light press-fit within the combustion chamber $6^1$, being inserted after installation of the main inlet valve $4^1$.

Appropriate selection of the wall thickness of liner 6a permits selective control of the compression ratio of that particular cylinder.  Correspondingly, this provides a simple capability for having non-uniform compression ratios in different cylinders of an engine.

CLAIMS:

1.    An internal combustion engine having at least one piston (7') reciprocable in a cylinder (71), a cylinder head, an inlet valve (4) for admitting a combustible air/fuel mixture into the cylinder, located within a recess in a portion of the cylinder head, having ignition means (63) therein, an exhaust valve (8), and means (2',21,23) for operating said valves in timed relation with the piston (7) characterised by an auxiliary air admission system including a first auxiliary inlet valve (5') located in the cylinder head, valve operating means (22,24) for actuating said first uxiliary valve (5') in coordinated relation with said first means (21) for operating said valves, auxiliary throttle valve means (3') in series relation with said first auxiliary valve, and auxiliary throttle valve control means for regulating said auxiliary throttle valve (3') in relation to air/fuel mixture admitted to said cylinder, to provide a predetermined zone having a higher concentration of air therein in relation to an adjacent zone thereabove containing a predominant amount of the fuel admitted to said cylinder.

2.    An engine as claimed in Claim 1, characterised in that the auxiliary air admission system includes a second auxiliary air inlet valve (1') connected in series flow relation with said first auxiliary air inlet valve (5') upstream thereof.

3. An engine as claimed in Claim 2, characterised in that the second auxiliary valve is resiliently biassed to oppose the inflow of auxiliary.

4. An engine as claimed in Claim 3, characterised in that the auxiliary throttle valve (3) is located between the second auxiliary valve (1) and the first auxiliary valve (5').

5. An engine as claimed in any of Claims 1 to 3, characterised in that the inlet valve (4), the exhaust valve (8) and the first auxiliary inlet valve (5') are located in a head portion of the engine, said inlet valve being located within a recess (6) in the head portion, having ignition means (63) located adjacent thereto.

6. An engine according to Claim 5, characterised in that the recess comprises a spheroidal portion connected by a passage to the interior of the cylinder and the inlet valve (5') and the ignition means (63) communicate with the spheroidal portion.

7. An engine according to Claim 6, characterised in that a liner (6A) is inserted in the passage (6), the liner having an internal diameter smaller than the diameter of the head of the inlet valve (5') and serving to increase the compression ratio.

0098096

1/4

FIG.1.

FIG.2.

FIG.3.

2/4

0098096

FIG.4.

1'

23

22  21

2'

4'

3'

71

5'  8'

6'

7'

FIG.5.

71

FIG.6.

8'

4'

5'

3/4

0098096

FIG.7.

FIG.8.